(19) Europäisches Patentamt
European Patent Office
Office européen des brevets

(11) **EP 2 526 279 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **11703811.7**

(22) Anmeldetag: **17.01.2011**

(51) Int Cl.:
*F02D 29/06* (2006.01)    *H02P 9/04* (2006.01)
*H02P 9/10* (2006.01)    *F02D 17/00* (2006.01)
*F02D 41/12* (2006.01)    *F02D 19/02* (2006.01)
*F02D 41/00* (2006.01)    *F02D 41/02* (2006.01)
*F02D 31/00* (2006.01)    *F02P 5/15* (2006.01)
*F02M 21/02* (2006.01)

(86) Internationale Anmeldenummer:
**PCT/AT2011/000022**

(87) Internationale Veröffentlichungsnummer:
**WO 2011/088483 (28.07.2011 Gazette 2011/30)**

(54) **STATIONÄRE KRAFTANLAGE**

STATIONARY POWER PLANT

STATION GÉNÉRATRICE STATIONNAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2010 AT 622010**

(43) Veröffentlichungstag der Anmeldung:
**28.11.2012 Patentblatt 2012/48**

(73) Patentinhaber: **GE Jenbacher GmbH & Co. OG 6200 Jenbach (AT)**

(72) Erfinder:
- **FAHRINGER, Albert
  A-6345 Kössen (AT)**
- **HIRZINGER, Johann
  A-6345 Kössen (AT)**
- **SCHAUMBERGER, Herbert
  A-6232 Münster (AT)**
- **WALDHARDT, Michael
  A-6410 Telfs (AT)**
- **KRUCKENHAUSER, Erich
  A-6232 Münster (AT)**
- **SARMIENTO, Oscar
  90408 Nürnberg (DE)**

(74) Vertreter: **Torggler & Hofinger Patentanwälte
Postfach 85
6010 Innsbruck (AT)**

(56) Entgegenhaltungen:
EP-A2- 1 492 222    WO-A1-2010/134994
US-A- 4 661 761    US-A1- 2009 134 845

EP 2 526 279 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben einer stationären Kraftanlage mit den Merkmalen des Oberbegriffs des Anspruchs 1 und eine stationäre Kraftanlage, umfassend eine Brennkraftmaschine mit den Merkmalen des Oberbegriffs des Anspruchs 5.

Stationäre Kraftanlagen werden häufig im so genannten Netzparallelbetrieb eingesetzt, wobei sie Energie in ein Stromversorgungsnetz (Verbundnetz) speisen. Stationäre Kraftanlagen gemäß der Erfindung umfassen eine Brennkraftmaschine, in der Treibstoff unter Anwesenheit von Luft verbrannt wird, und einen Wechselstromgenerator, der von der Brennkraftmaschine angetrieben wird. Insbesondere Gasmotoren, das heißt Brennkraftmaschinen, die mit einem gasförmigen Treibstoff ottomotorisch betrieben werden, eignen sich für derartige stationäre Kraftanlagen, da sie einen hohen Wirkungsgrad und eine geringe Schadstoffemission aufweisen. Beim Stand der Technik gibt das Energieversorgungsnetz die Sollspannung und die Sollfrequenz des Wechselstromgenerators vor. Kommt es zu einem Spannungsabfall im Energieversorgungsnetz, kommt es zu einem Wegfall dieser Vorgabe von Sollspannung und Sollfrequenz, was zur Folge hat, dass die Drehzahl der Brennkraftmaschine und in weiterer Folge auch die des Wechselstromgenerators auf Grund des Wegfalls des Widerstands durch das Energieversorgungsnetz rasch ansteigt. Es sind zwar durchaus schon Regelungskonzepte bekannt, bei denen das Hochdrehen der Brennkraftmaschine vermindert wird, indem die Treibstoffzufuhr zur Brennkraftmaschine verringert wird, jedoch führt das kurzzeitige Hochdrehen von Brennkraftmaschine und Wechselstromgenerator zu einer Phasenverschiebung der abgegebenen Wechselspannung im Vergleich zum Energieversorgungsnetz. Wenn der Netzausfall nur kurzfristig ist und das Energieversorgungsnetz dann wieder zugeschaltet werden würde, wäre man mit einer Phasenverschiebung konfrontiert, die selbstverständlich unerwünscht ist. In der Praxis ist man daher dazu übergegangen, die Verbindung zwischen Energieversorgungsnetz und Wechselstromgenerator zu unterbrechen und bei Wiederherstellung des Netzes den Wechselstromgenerator erst dann wieder zuzuschalten, wenn Phasenübereinstimmung herrscht. Gesetzliche Vorgaben sollen eine Unterbrechung der Verbindung zwischen Energieversorgungsnetz und Wechselstromgenerator verhindern.

Gattungsgemäße Verfahren und stationäre Kraftanlagen gehen aus US 2009/134845 A1, EP 1 492 222 A2 und EP 1 281 851 A2 hervor.

Aufgabe der vorliegenden Erfindung ist es daher, ein Verfahren und eine stationäre Kraftanlage der jeweils eingangs genannten Art bereitzustellen, bei dem die genannten Probleme vermindert sind.

Diese Aufgabe wird durch ein Verfahren mit den Merkmalen des Anspruchs 1 und eine stationäre Kraftanlage mit den Merkmalen des Anspruchs 5 gelöst.

Unter der Verbindung ist hierbei die elektrische Verbindung zwischen Energieversorgungsnetz und Wechselstromgenerator gemeint, mit der Energie vom Generator an das Energieversorgungsnetz übertragen wird.

Eine Idee der Erfindung besteht darin, die Verbrennung des Treibstoff/Luftgemischs in der Brennkraftmaschine zu vermindern, indem die Treibstoffmenge, die zugeführt wird, verringert bzw. sogar komplett unterbrochen wird, sodass kein unverbranntes Gemisch durch die Brennkraftmaschine geführt werden muss. Vor allen Dingen führt das Verfahren bzw. die stationäre Kraftanlage mit Regeleinrichtung dazu, dass die Brennkraftmaschine beim Netzausfall nicht hochdreht, sondern ohne Verbrennung oder mit teilweiser bzw. verminderter Verbrennung weiter läuft und dabei auch den Generator weiter antreibt. Die geringe Trägheit von Brennkraftmaschine und Wechselstromgenerator führt dazu, dass es bei einem nur sehr kurzzeitigen Wegfall des Energieversorgungsnetzes oder einem Lastabfall zu einer großen Phasenverschiebung zwischen Wechselstromgenerator und Energieversorgungsnetz kommt. Sollte der Wegfall des Energieversorgungsnetzes eine längere Zeitspanne andauern, sodass die Ist-Drehzahl der Brennkraftmaschine unter einen vorgebbaren Sollwert fällt, so kann die Verbrennung in der Brennkraftmaschine wieder aufgenommen werden bzw. die noch laufende Verbrennung erhöht werden, indem wieder Treibstoff zugeführt wird bzw. eine entsprechende Zündeinrichtung wieder aktiviert wird. Dabei wird die Phasenlage des Wechselstromgenerators an die Phasenlage des Energieversorgungsnetzes hingeführt.

In einer vorteilhaften Ausführungsvariante kann beim Verfahren vorgesehen sein, dass die Brennkraftmaschine wenigstens einen Brennraum umfasst, in dem das Treibstoff/Luftgemisch verbrannt wird, wobei die Brennstoffzufuhr zum wenigstens einen Brennraum unterbrochen wird.

Weiters kann vorgesehen sein, dass die Brennkraftmaschine n Brennräume umfasst und dass die Brennstoffzufuhr zu m Brennräumen unterbrochen wird, wobei m und n natürliche Zahlen $\geq 1$ sind und m $\leq$ n ist.

In einer Ausführungsvariante kann vorgesehen sein, dass die Brennkraftmaschine wenigstens einen Brennraum umfasst, wobei das Treibstoff/Luftgemisch mit einer Zündeinrichtung gezündet wird, wobei wenigstens eine Zündeinrichtung deaktiviert wird.

Dabei kann weiters vorgesehen sein, dass die Brennkraftmaschine n Brennräume umfasst und dass die Zündeinrichtung zu m Brennräumen deaktiviert wird, wobei m und n natürliche Zahlen $\geq 1$ sind und m $\leq$ n ist.

Hinsichtlich der stationären Kraftanlage kann vorgesehen sein, dass die Brennkraftmaschine n Brennräume mit jeweils einer Treibstoffzufuhr umfasst, wobei die Regeleinrichtung die Treibstoffzufuhr zu m Brennräumen unterbricht, wobei m und n natürliche Zahlen $\geq 1$ sind und m $\leq$ n ist.

Weiters kann vorgesehen sein, dass die Brennkraftmaschine n Brennräume mit jeweils einer Zündeinrichtung umfasst, wobei die Regeleinrichtung m Zündeinrichtungen deaktiviert, wobei m und n natürliche Zahlen ≥ 1 sind und m ≤n ist.

Schließlich kann vorgesehen sein, dass die Regeleinrichtung bei Unterschreiten der Ist-Drehzahl des Wechselstromgenerators unter einen vorgebbaren Sollwert oder bei einer Änderung der Drehzahl pro Zeiteinheit oberhalb eines vorgebbaren Grenzwertes die Treibstoffzufuhr erhöht und/oder wenigstens eine Zündeinrichtung aktiviert.

Weitere Details und Vorteile der Erfindung werden an Hand der nachfolgenden Figuren und Figurenbeschreibung erläutert.

Es zeigen

Fig. 1     einen schematischen Aufbau einer stationären Kraftanlage,
Fig. 2     eine Detailansicht der Kraftanlage von Fig. 1 und
Fig. 3     den zeitlichen Verlauf eines erfindungsgemäßen Verfahrens.

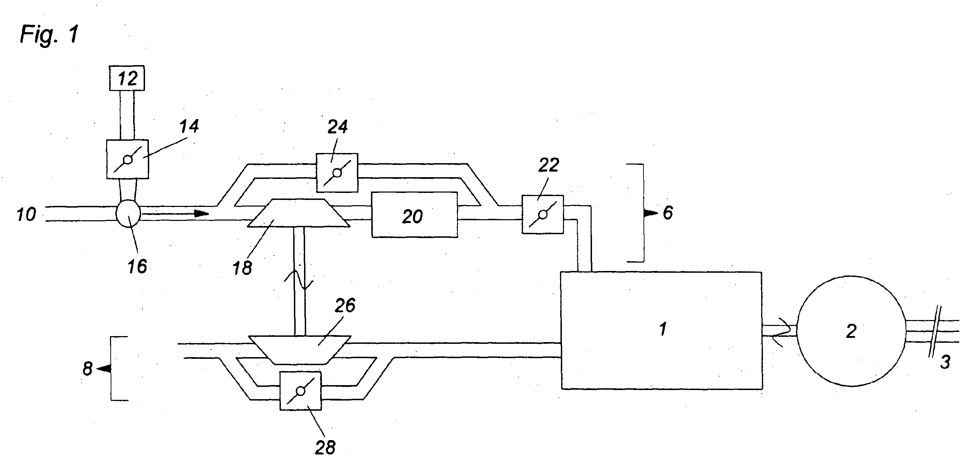

Die Fig. 1 zeigt schematisiert den Aufbau einer stationären Kraftanlage gemäß der Erfindung. Die stationäre Kraftanlage setzt sich aus einer Brennkraftmaschine 1 und einem Wechselstromgenerator 2 zusammen. Die Brennkraftmaschine 1 treibt den Wechselstromgenerator 2 an, der wiederum mit einem Energieversorgungsnetz 3 verbunden ist. Bei der Brennkraftmaschine 1 handelt es sich um einen mehrzylindrigen Gasmotor, der in ottomotorischer Betriebsweise, d. h. fremdgezündet, arbeitet. Der Gasmotor 1 weist mehrere Brennräume (nicht gezeigt), vorzugsweise in Form von Hubkolbenzylindern, auf, in denen jeweils eine Zündeinrichtung dafür Sorge trägt, dass das Treibstoff/Luftgemisch verbrannt wird und der Hubkolben Arbeit verrichtet und dabei den Wechselstromgenerator 2 antreibt. Die Brennkraftmaschine 1 weist einen Einlasstrakt 6 und einen Auslasstrakt 8 auf. Der Einlasstrakt 6 versorgt die Brennkraftmaschine 1 mit Luft und Treibstoff. Der Einlasstrakt weist hierfür einen Lufteinlass 10 auf und ist mit einer Treibstoffquelle 12 verbunden. Der gasförmige Treibstoff (beispielsweise Methan oder andere Gase) wird beispielsweise über ein Dosierventil 14 eindosiert und zu einer Gemischbildungseinrichtung 16 geführt, in die auch die Luftzufuhr 10 mündet. Das in der Gemischbildungseinrichtung 16 gebildete Treibstoff/Luftgemisch wird dann zu einer Verdichtungseinrichtung 18 geführt, in der das Treibstoff/Luftgemisch verdichtet wird. Das verdichtete Treibstoff/Luftgemisch wird danach in einer Kühleinrichtung 20 abgekühlt. Über eine Drosseleinrichtung 22 kann die in den Brennraum der Brennkraftmaschine 1 zugeführte Menge an Treibstoff/Luftgemisch gesteuert werden. Die Menge an Treibstoff/Luftgemisch kann alternativ oder zusätzlich über ein Umblaseventil 24 reguliert werden, in dem ein Treibstoff/Luftgemisch rezirkuliert, d.h. wieder vor die Verdichtungseinrichtung 18 rückgeführt wird.

Im Abgastrakt 8 ist eine Abgasturbine 26 vorgesehen, die über eine Welle die Verdichtungseinrichtung 18 antreibt. Zur Regulierung der Drehzahl des Abgasturboladers 26 kann ein Bypass 28 vorgesehen sein.

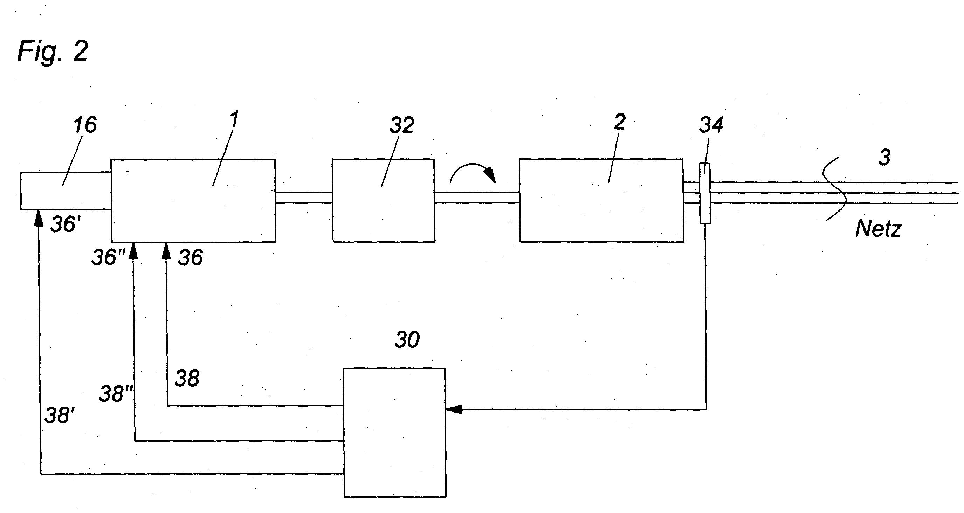

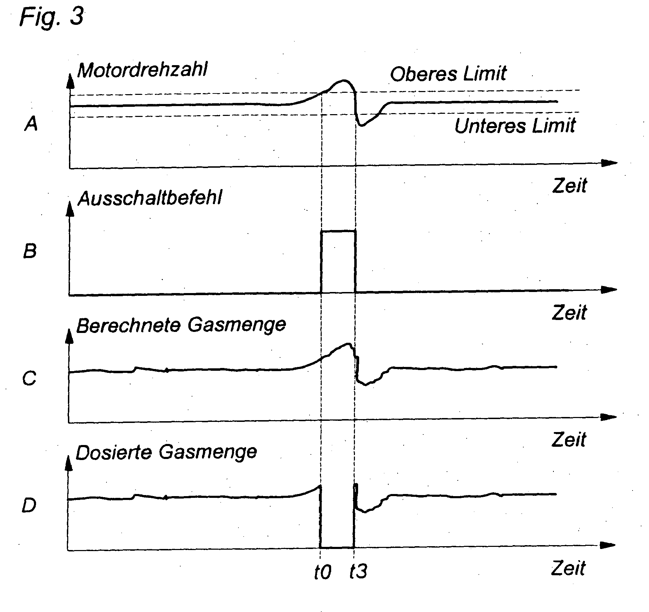

In der Fig. 2 ist ein Blockdiagramm der stationären Kraftanlage gemäß Fig. 1 gezeigt, in dem die Regelung bzw. das Verfahren näher erläutert werden. Die Brennkraftmaschine 1 ist über eine Kupplung 32 mit dem Wechselstromgenerator 2 verbunden, der das Energieversorgungsnetz 3 speist. Weiters sind Mittel 34 zur Erfassung von Spannung und Frequenz, gegebenenfalls auch des Stroms des Energieversorgungsnetzes 3 (in der Regel handelt es sich um an sich bekannte Sensoren) vorgesehen, die mit einer Regeleinrichtung 30 verbunden sind und die entsprechenden Messdaten liefern. In der Regeleinrichtung 30 sind die vorgegebenen Sollwerte abgespeichert und es werden die Istwerte mit diesen Sollwerten verglichen. Bei einer Abweichung vom Sollwert erfolgt ein Regeleingriff (siehe auch Figurenbeschreibung zu den Fig. 3 und 4) an der Brennkraftmaschine 1 über die Verbindungen 38, 38',38". An der Brennkraftmaschine 1 sind Aktuatoren 36, 36', 36" vorgesehen, an denen die Regeleingriffe erfolgen, falls es z.B. zu einer Abweichung der Sollspannung und/oder Sollfrequenz und/oder Generatorstrom kommt. Hierfür kann einerseits die Treibgasmenge reguliert werden z.B. über Aktuatoren 36, 36', 36" wie das Gasdosierventil 14, die Drosseleinrichtung 22, das Umblaseventil 24 oder den Bypass 28, andererseits können eine oder mehrere Zündeinrichtungen aktiviert bzw. deaktiviert werden.

In der Fig. 3 sind schematisch einzelne Zustände als Funktion der Zeit für das erfindungsgemäße Verfahren gezeigt. Diagramm A zeigt die Drehzahl der Brennkraftmaschine 1 als Funktion der Zeit t. Da die Drehzahl n der Brennkraftmaschine 1 ein Maß für die Drehzahl des Wechselstromgenerators 2 ist, kann dieser Wert herangezogen werden. Genauso wäre es aber auch möglich die Drehzahl des Wechselstromgenerators 2 heranzuziehen. Erkennbar ist, dass die Drehzahl der Brennkraftmaschine 1 bis kurz vor dem Zeitpunkt t0 im Wesentlichen konstant verläuft, was auf einen konstanten Zustand des Energievorsorgungsnetzes 2 schließen lässt. Anschließend kann man einen Netzabfall oder einen Lastabwurf beobachten, der dazu führt, dass die Drehzahl der Brennkraftmaschine 1 plötzlich ansteigt. Wenn zum Zeitpunkt t0 ein oberes Drehzahllimit erreicht wird, erfolgt über die Regeleinrichtung 30 ein Ausschaltbefehl an alle Zündeinrichtungen bzw. die Gasmengenzufuhr. Die Motordrehzahl steigt noch kurzzeitig an. Anschließend fällt die Drehzahl ab, wobei bei Erreichen eines unteren Limits zum Zeitpunkt t3 die Regeleinrichtung die Brennkraftmaschine wieder in Betrieb setzt, indem die Treibstoffzufuhr bzw. die Zündeinrichtungen aktiviert werden. Die Dauer des Ausschaltbefehls ist in Diagramm B gezeigt.

Das Diagramm C zeigt die berechnete Treibstoffmenge, während das Diagramm D die tatsächlich zugeführte Treibstoffmenge zeigt. Die berechnete und zugeführte Gasmenge bis zum Zeitpunkt t0 identisch. Durch die Abschaltung der Treibstoffzufuhr zum Zeitpunkt t0 ergibt sich die berechnete Gasmenge aus der Drehzahl der Brennkraftmaschine, während aber tatsächlich kein Treibstoff zugeführt wird. Nach Wiedereinstellen der Treibstoffzufuhr (und Aktivierung der Zündeinrichtungen) kommt es wieder zur Übereinstimmung der berechneten und der dosierten Gasmenge.

Die Erfindung bezieht sich im Wesentlichen also auf ein Regelungskonzept einer Brennkraftmaschine, vorzugsweise in Form eines Gasmotors mit mehreren Zylindern, der einen Wechselstromgenerator antreibt. Dabei erfolgt eine Drehzahlregelung der Brennkraftmaschine durch Gasdosierung, zylinderselektive Zündung und die Positionierung der Stellorgane nach einem Lastabwurf, der durch den normalen Motorbetrieb bzw. nach einem Netzausfall verursacht werden kann. Nach der Erkennung eines Lastabwurfs werden die Stellorgane so positioniert, dass ein schneller Abbau des Ladedruckes erreicht wird. Zudem wird die Gasmenge so dosiert und die Zylinder-Zündungsfolge so gesteuert, dass keine Verbrennung im Zylinder stattfindet. Der Lastabwurf wird durch einen Zusammenhang zwischen den der Brennkraftmaschine verfügbaren Größen und durch die Steuerung berechneten Zwischengrößen identifiziert. Durch die gezielte Positionierung der Stellorgane ist eine schnelle Reduktion des Ladedrucks möglich, ohne die Gefahr, an die Pumpgrenze der Verdichtungseinrichtung zu kommen, was zu instabilen Fahrbetrieb der Brennkraftmaschine führen kann.

Vorteilhaft an dieser Methode ist, dass während der Bremsphase kein unverbranntes Gemisch durch die Brennkraftmaschine und in den Auspufftrakt gelangen kann und es zu keinen Nebenwirkungen (ungewollte Nachzündungen, Verpuffungen) kommt. Weiters ermöglicht dieser Ansatz die bestmögliche Bremswirkung durch das kurzzeitige Deaktivieren der Verbrennung aller Zylinder.

Die Erkennung eines Netzausfalls (NA) erfolgt durch die Erfüllung eines Kriteriums, welches aus einem logischen Zusammenhang zwischen vier Variablen: Spannung $U_t$, Strom $I_t$, Frequenzvariation $\dfrac{df}{dt}$ und Polradwinkel $\delta$ besteht:

$$NA = f\left(U_t, I_t, \frac{df}{dt}, \delta\right). \qquad (1)$$

Falls die Frequenzvariation wegen eines Komplettausfalls des Energieversorgungsnetzes nicht vorhanden ist wird sie durch eine äquivalente Kenngröße $x$ ersetzt, wobei das Kriterium zur Erkennung eines Lastabwurfs unverändert bleibt.

$$NA_{mod} = f\left(U_t, I_t, x, \delta\right). \qquad (2)$$

Eventuell könnte man auch dI/dt oder dU/dt als Auslösekriterium verwenden.

Wird ein Netzausfall erkannt, wird der NA-Algorithmus ein logisches Signal "True" (1) liefern.

Anhand Blind- und Wirkleistung sowie Linienspannung wird der Strom am Generatoranschluss $I_t$ und der Phasenwinkel $\phi$ berechnet gemäß Gl. (3) und (4).

$$I_t = \frac{\sqrt{P_t^2 + Q_t^2}}{U_t} \qquad (3)$$

$$\phi = \cos^{-1}\left(\frac{P_t}{U_t I_t}\right). \qquad (4)$$

Der Polradwinkel lässt sich im stationären Generatorbetrieb durch die Generatorkenngrößen ausrechnen:

$$\delta \approx \tan^{-1}\left(\frac{X_q I_t \cos\phi}{U_t + X_q I_t \sin\phi}\right). \qquad (5)$$

Für eine optimale Regelung ist für das Verfahren und die stationäre Kraftanlage vorgesehen, die Summe aus Phasenlage und Polradwinkel innerhalb von +/- 180° zu halten, was somit die Regelgröße darstellt. Erfindungsgemäß ist bis zur Wiederkehr des Energieversorgungsnetzes auf einen Wert, der vor der Störung bzw. des Ausfalls angestanden hat, hin zu regeln.

Entsprechend diesem Vorgang wird für den jeweiligen Betriebspunkt des Gasmotors die aktuell benötigte Gasmenge gemäß nachfolgender Formel berechnet und an zentraler Stelle zudosiert:

$$Q_{gas} = f(\eta_{vol}, T_2', p_2', n, L_{min}, \lambda) \qquad (6)$$

wobei, $Q_{GAS}$ die Gasmenge, $\eta_{VOL}$ der volumetrische Wirkungsgrad, n die Motordrehzahl, $T_2'$ die Gemischtemperatur, $p_2'$ der Ladedruck, $L_{MIN}$ der Mindestluftbedarf (stöchiometrisch, Gaskenngröße) und $\lambda$ der Luftzahl (Luftüberschuss gegenüber stöchiometrischen Verbrennung) entsprechen.

Aufgrund der Gasdosierung durch ein Gasdosierventil besteht nun die Möglichkeit in erster Linie die Gasmenge schnell gemäß obigem Zusammenhang zu dosieren. Weiters ergibt sich erst durch den Einsatz dieses schnellen Ventils die erfindungsgemäße Möglichkeit, die Gasmenge losgelöst vom obigen Formalismus auch ausreichend schnell komplett zu drosseln und dadurch die Verbrennung in der Brennkraftmaschine komplett zu unterbinden. Vorteilhaft daran ist, dass die Berechnung der Gasmenge im Hintergrund für den aktuellen Arbeitspunkt stetig weitergeführt werden kann, jedoch für eine gewisse Zeit nicht an das Gasdosierventil weitergegeben wird, dadurch keine Verbrennung erfolgt und somit eine Bremswirkung dargestellt wird. Eine solche Bremswirkung kann notwendig werden für den Lastabwurf am Gasmotor und eine dementsprechende Drehzahlüberhöhung.

Erreicht die Brennkraftmaschine wieder einen erwünschten Betriebspunkt an dem die Bremswirkung nicht mehr benötigt wird, kann die Gaszudosierung wieder unmittelbar auf das Gasdosierventil eingeschalten werden. Es ist somit möglich vom Zustand 'Bremswirkung - keine Verbrennung' direkt oder in Schritten zum Zustand 'Standardbetriebsweise - Verbrennung' überzugehen.

Unter Bezugnahme auf die Fig. 3 erfolgt zum Zeitpunkt t0 tritt das Kriterium 0: Motordrehzahl ≥ Oberes Limit ein und der Ausschaltbefehl wird bis zum Erreichen des Kriteriums 3: Drehzahl ≤ Unteres Limit zum Zeitpunkt t1 generiert. Somit wird für die Zeitspanne [t0, t3] die Gaszufuhr auf den Wert 0 gesetzt.

Hier kann jedoch ergänzend ein gestaffeltes Drosseln der Gasmenge einzelner Zylinder oder Zylindergruppen abhängig von gestaffelten Grenzwerten (Kriterien) erfolgen. Abhängig von der Größenordnung der Grenzwertüberschreitung wird sukzessive die Gaszufuhr mehrer bis hin zu allen Zylindern oder Zylindergruppen komplett gedrosselt und dadurch eine gestaffelte Bremswirkung ermöglicht.

Zeitpunkt t0 - Kriterium 0: Motordrehzahl ≥ Oberes Limit 0 → Ausschaltbefehl Zylindergruppe 0

Zeitpunkt t1 - Kriterium 1: Motordrehzahl ≥ Oberes Limit 1 → Ausschaltbefehl Zylindergruppe 1
usw.
Ebenso erfolgt das Wiederaktivieren der ausgeschalteten Zylinder oder Zylindergruppen in gestaffelter Weise.

Zeitpunkt t2 - Kriterium 2: Motordrehzahl ≤ Unteres Limit 1 → Wiedereinschaltbefehl Zylindergruppe 1

Zeitpunkt t3 - Kriterium 3: Motordrehzahl ≤ Unteres Limit 0 → Wiedereinschaltbefehl Zylindergruppe 0
usw.

Es erfordert eine etwas aufwendigere Logik zum Deaktivieren und Wiederaktivieren der entsprechenden Zylinder bzw. Zylindergruppen. Diese ermöglicht jedoch auch weitere Kombinationen beispielsweise gestaffeltes Deaktivieren der Zylinder bzw. Zylindergruppen und einheitliches Wiederaktivieren aller Zylinder nach Unterschreiten eines festgelegten Grenzwertes.

Eine Zylindergruppe ist eine beliebige, technisch sinnvolle Gruppierung mehrerer, beispielsweise von 4 Zylindern.

**Patentansprüche**

1. Verfahren zum Betreiben einer stationären Kraftanlage, wobei in einer Brennkraftmaschine (1) ein Treibstoff/Luftgemisch verbrannt wird und wobei die Brennkraftmaschine (1) einen Wechselstromgenerator (2) antreibt, der mit einem Energieversorgungsnetz (3) verbunden ist und Energie an das Energieversorgungsnetz (3) abgibt, **dadurch gekennzeichnet, dass** eine Störung oder ein Ausfall des Energieversorgungsnetzes (3) durch Erfassung von Spannung und Frequenz und/oder Strom des Energieversorgungsnetzes (3) detektiert wird und bei einem Überschreiten der Ist-Drehzahl des Wechselstromgenerators (2) oder der Brennkraftmaschine (1) über einen vorgebbaren Maximalwert durch eine Störung oder den Ausfall des Energieversorgungsnetzes (3) die Verbrennung in der Brennkraftmaschine (1) durch Unterbrechung der Brennstoffzufuhr zu wenigstens einem Brennraum der Brennkraftmaschine (1) wenigstens teilweise gestoppt wird, während die Verbindung zum Energieversorgungsnetz (3) aufrecht erhalten wird und dass gasförmiger Treibstoff über ein Gasdosierventil (14) eindosiert wird, wobei die Verbrennung in der Brennkraftmaschine (1) mittels kompletter Drosselung des Gasdosierventils (14) komplett unterbunden wird, wobei eine Berechnung der Gasmenge im Hintergrund für den aktuellen Betriebspunkt der Brennkraftmaschine (1) stetig weitergeführt wird, jedoch für eine gewisse Zeit, in welcher eine Bremswirkung der Brennkraftmaschine (1) benötigt wird, nicht an das Gasdosierventil (14) weitergegeben wird und wobei wenn die Brennkraftmaschine (1) wieder einen erwünschten Betriebspunkt erreicht, an welchem die Bremswirkung nicht mehr benötigt wird, die Gaszudosierung wieder unmittelbar auf das Gasdosierventil (14) eingeschalten wird und dass wenn die Ist-Drehzahl unter einen vorgebbaren Sollwert fällt, die Verbrennung in der Brennkraftmaschine (1) wieder aufgenommen wird bzw. eine noch laufende Verbrennung erhöht wird, indem wieder Treibstoff zugeführt wird, wobei dabei eine Summe aus Phasenlage und Polwinkel ($\delta$) des Wechselstromgenerators (2) bis zur Wiederkehr des Energieversorgungsnetzes (3) auf einen Wert hin geregelt wird, der vor der Störung bzw. dem Ausfall bestanden hat.

2. Verfahren nach Anspruch 1, **dadurch gekennzeichnet, dass** die Brennkraftmaschine (1) wenigstens einen Brennraum umfasst, wobei das Treibstoff/Luftgemisch mit einer Zündeinrichtung gezündet wird, wobei wenigstens eine Zündeinrichtung deaktiviert wird.

3. Verfahren nach Anspruch 2, **dadurch gekennzeichnet, dass** die Brennkraftmaschine (1) n Brennräume umfasst und dass die Zündeinrichtung zu m Brennräumen deaktiviert wird, wobei m und n natürliche Zahlen $\geq$ 1 sind und m $\leq$ n ist.

4. Verfahren nach einem der Ansprüche 1 bis 3, **dadurch gekennzeichnet, dass** nach Unterschreiten der Ist-Drehzahl des Wechselstromgenerators unter einen vorgegebenen Sollwert oder bei einem Abfall der Ist-Drehzahl mit einer Geschwindigkeit größer als einem vorgegebenen Maximalwert die verbrannte Energiemenge wenigstens teilweise erhöht wird.

5. Stationäre Kraftanlage umfassend

   • eine Brennkraftmaschine (1) mit wenigstens einer Zündeinrichtung,
   • einen Wechselstromgenerator (2), der von der Brennkraftmaschine (1) betreibbar ist, wobei der Wechselstromgenerator (1) im Betriebszustand mit einem Energieversorgungsnetz (3) verbunden ist und Energie an das Energieversorgungsnetz (3) abgibt und das Energieversorgungsnetz (3) die Sollspannung und die Sollfrequenz des Wechselstromgenerators vorgibt,

   **gekennzeichnet durch** eine Regeleinrichtung (30), welche die tatsächliche Generatorspannung und/oder die tatsächliche Generatorfrequenz und/oder den Strom des Wechselstromgenerators (1) überwacht, wobei bei einem durch eine Störung oder einen Ausfall des Energieversorgungsnetzes (3) verursachten Wegfall der Generatorspannung und/oder einem Anstieg der Generatorfrequenz über einen vorgebbaren Grenzwert oder mit einer Geschwindigkeit oberhalb eines vorgebbaren Grenzwertes und/oder einem Anstieg des Generatorstroms über einen vorgebbaren Grenzwert oder mit einer Geschwindigkeit oberhalb eines vorgebbaren Grenzwertes die Regeleinrichtung (30) die Treibstoffzufuhr zur Brennkraftmaschine (1) vermindert, während die Verbindung von Wechselstromgenerator (2) und Energieversorgungsnetz (3) aufrecht erhalten bleibt und dass gasförmiger Treibstoff über ein Gasdosierventil (14) eindosiert wird, wobei die Verbrennung in der Brennkraftmaschine (1) mittels kompletter Drosselung des Gasdosierventils (14) komplett unterbunden wird, wobei eine Berechnung der Gasmenge im Hintergrund für den aktuellen Betriebspunkt der Brennkraftmaschine (1) stetig weitergeführt wird, jedoch für eine gewisse Zeit, in welcher eine Bremswirkung der Brennkraftmaschine (1) benötigt wird, nicht an das Gasdosierventil (14) weitergegeben wird und wobei wenn die Brennkraftmaschine (1) wieder einen erwünschten Betriebspunkt erreicht, an welchem die Bremswirkung nicht mehr benötigt wird, die Gaszudosierung wieder unmittelbar auf das Gasdosierventil (14) eingeschalten wird und dass wenn eine Ist-Drehzahl des Wechselstromgenerators (2) oder der Brennkraftmaschine (1) unter einen vorgebbaren Sollwert fällt, wieder Treibstoff zugeführt wird, wobei eine Summe aus Phasenlage und Polwinkel des Wechselstromgenerators (2) bis zur Wiederkehr des Energieversorgungsnetzes (3) auf einen Wert hin geregelt wird, der vor der Störung bzw. dem Ausfall bestanden hat.

6. Stationäre Kraftanlage nach Anspruch 5, **dadurch gekennzeichnet, dass** die Brennkraftmaschine (1) n Brennräume mit jeweils einer Treibstoffzufuhr umfasst, wobei die Regeleinrichtung (30) die Treibstoffzufuhr zu m Brennräumen unterbricht, wobei m und n natürliche Zahlen $\geq 1$ sind und m $\leq$ n ist.

7. Stationäre Kraftanlage nach Anspruch 5 oder Anspruch 6, **dadurch gekennzeichnet, dass** die Brennkraftmaschine (1) n Brennräume mit jeweils einer Zündeinrichtung umfasst, wobei die Regeleinrichtung (30) m Zündeinrichtungen deaktiviert, wobei m und n natürliche Zahlen $\geq 1$ sind und m $\leq$ n ist.

8. Stationäre Kraftanlage nach einem der Ansprüche 6 bis 7, **dadurch gekennzeichnet, dass** die Regeleinrichtung (30) bei Unterschreiten der Ist-Drehzahl des Wechselstromgenerators (2) unter einen vorgebbaren Sollwert oder bei einer Änderung der Drehzahl pro Zeiteinheit oberhalb eines vorgebbaren Grenzwertes die Treibstoffzufuhr erhöht und/oder wenigstens eine Zündeinrichtung aktiviert.

**Claims**

1. A method of operating a stationary power plant, wherein a fuel/air mixture is burned in an internal combustion engine (1) and wherein the internal combustion engine (1) drives an alternating current generator (2) connected to an energy supply network (3) and providing energy to the energy supply network (3), **characterised in that** a fault or a failure of the energy supply network (3) is detected by detecting the voltage and frequency and/or the current of the energy supply network (3) and when the actual rotary speed of the alternating current generator (2) or the internal combustion engine (1) exceeds a predefinable maximum value due to a fault or failure of the energy supply network (3) combustion in the internal combustion engine (1) is at least partially stopped, by interrupting the fuel supply to at least one combustion chamber of the internal combustion engine (1) while the connection to the energy supply network (1) is maintained and wherein gaseous fuel is metered by way of a metering valve (14), wherein for completely preventing combustion in the internal combustion engine (1) the metering valve (14) is completely throttled, wherein the calculation of the amount of gas for the current working point is steadily pursued in the background, but is not passed to the gas metering valve (14) for a certain time, wherein a braking action of the internal combustion engine (1) is afforded and wherein when the internal combustion engine (1) reaches a desired operating point again, at which the braking action is no longer required, the metered gas-feed can be switched on again directly to the gas metering valve (14) and if the actual rotary speed of the internal combustion engine (1) drops below a predefinable reference valve then combustion in the internal combustion engine (1) is taken up again or the combustion which is still occurring is increased by fuel being fed again, wherein the total of phase position and polar wheel angle ($\delta$) of the alternating current generator (2) is to be regulated until the energy supply (3) is restored to a valve which prevailed prior to the fault or failure.

2. The method as set forth in claim 1 wherein the internal combustion engine (1) has at least one combustion chamber, wherein the fuel/air mixture is ignited with an ignition device, wherein at least one ignition device is deactivated.

3. The method as set forth in claim 2 wherein the internal combustion engine (1) includes n combustion chambers, wherein the ignition device to m combustion chambers is deactivated, wherein m and n are natural numbers $\geq 1$ and m $\leq$ n.

4. The method as set forth in at least one of the claims 1 to 3 wherein after the actual rotary speed of the alternating current generator falls below a predetermined reference value or in the event of a drop in the actual rotary speed at a rate greater than a predetermined maximum value the amount of energy burnt is at least partially increased.

5. A stationary power plant including

   - an internal combustion engine (1) having at least one ignition device,
   - an alternating current generator (2) which is operable by the internal combustion engine (1), wherein the alternating current generator (2) in the operating condition is connected to an energy supply network (3) and delivers energy to the energy supply network (3) and the energy supply network (3) predetermines the reference voltage and the reference frequency of the alternating current generator,

   **characterised in that** a regulating device (30) monitors at least one of the group of the actual generator voltage, the actual generator frequency, the current of the alternating current generator, wherein in case of a generator voltage cessation and/or a rise in the generator frequency above a predeterminable limit valve or at a rate above a predeterminable limit valve and/or a rise in the generator current above a predeterminable limit valve or a speed above a predterminable limit valve through a fault or a failure of the engine supply network (3),
the regulating device (30) reduces the fuel supply to the internal combustion engine (1) while the connection of the alternating current generator (2) and the energy supply network (3) remains maintained, and wherein gaseous fuel is metered by way of a metering valve (14), wherein for completely preventing combustion in the internal combustion engine (1) the metering valve (14) is completely throttled, wherein the calculation of the amount of gas for the current working point is steadily pursued in the background, but is not passed to the gas metering valve (14) for a certain time, wherein a braking action of the internal combustion engine (1) is afforded and wherein when the internal combustion engine (1) reaches a desired operating point again, at which the braking action is no longer required, the metering gas-feed can be switched on again directly to the gas metering valve (14) and if the actual rotary speed of the internal combustion engine (1) drops below a predefinable reference valve then combustion in the internal combustion engine (1) is taken up again or the combustion which is still occurring in increased by fuel being fed again, wherein the total of phase position and polar wheel angle ($\delta$) of the alternating current generator (2) is to be regulated until the energy supply network (3) is restored to a valve which prevailed prior to the fault or failure.

6. The stationary power plant as set forth in claim 5 wherein the internal combustion engine (1) includes n combustion chambers with a respective fuel supply, wherein the regulating device (30) interrupts the fuel supply to m combustion chambers, wherein m and n are natural numbers $\geq 1$ and $m \leq n$.

7. The stationary power plant as set forth in claim 5 or claim 6 wherein the internal combustion engine (1) includes n combustion chambers with a respective ignition device, wherein the regulating device (30) deactivates m ignition devices, wherein m and n are natural numbers $\geq 1$ and $m \leq n$.

8. The stationary power plant as set forth in at least one of the claims 6 to 7 wherein when the actual rotary speed of the alternating current generator (2) falls below a predeterminable reference value or upon a change in the rotary speed per unit of time above a predeterminable limit value the regulating device (30) increases the fuel supply and/or activates at least one ignition device.

**Revendications**

1. Procédé servant à faire fonctionner une centrale électrique stationnaire, dans lequel un mélange carburant/air est brûlé dans un moteur à combustion interne (1) et dans lequel le moteur à combustion interne (1) entraîne un générateur de courant alternatif (2), qui est relié à un réseau de distribution électrique (3) et qui fournit de l'énergie au réseau de distribution électrique (3), **caractérisé en ce qu'**une défaillance ou une panne du réseau de distribution électrique (3) est détectée par détection de la tension et de la fréquence et/ou du courant du réseau de distribution électrique (3) et, lors d'un dépassement de la vitesse de rotation réelle du générateur de courant alternatif (2) ou du moteur à combustion interne (1) au-dessus d'une valeur maximale pouvant être prédéfinie du fait d'une défaillance ou de la panne du réseau de distribution électrique (3), la combustion dans le moteur à combustion interne (1) est arrêtée au moins en partie par l'interruption de l'amenée de combustible vers au moins une chambre de combustion du moteur à combustion interne (1), alors que le raccordement au réseau de distribution électrique (3) est maintenu, et que du carburant sous forme gazeuse est injecté de manière dosée par l'intermédiaire d'une soupape de dosage de gaz (14), dans lequel la combustion dans le moteur à combustion interne (1) est totalement empêchée au moyen d'un étranglement total de la soupape de dosage de gaz (14), dans lequel un calcul de la quantité de gaz est poursuivi en permanence en arrière-plan pour le point de fonctionnement instantané du moteur à combustion interne (1), mais n'est pas transmis à la soupape de dosage de gaz (14) pour une certaine durée, lors de laquelle une action de freinage du moteur à combustion interne (1) est requise et dans lequel, quand le moteur à combustion interne (1) atteint à nouveau un point de fonctionnement souhaité, au niveau duquel l'action de freinage n'est plus requise, l'ajout dosé de gaz est enclenché à nouveau directement sur la soupape de dosage de gaz (14), et que quand la vitesse de rotation réelle tombe sous une valeur théorique pouvant être prédéfinie, la combustion dans le moteur à combustion interne (1) est reprise ou une combustion encore en cours est augmentée **en ce que** du carburant est amené à nouveau, dans lequel dans ce cadre une somme composée de la position de phase et de l'angle polaire ($\delta$) du générateur de courant alternatif (2) est réglée, jusqu'au retour du réseau de distribution électrique (3), sur une valeur qui était présente avant la défaillance ou la panne.

2. Procédé selon la revendication 1, **caractérisé en ce que** le moteur à combustion interne (1) comprend au moins une chambre de combustion, dans lequel le mélange carburant/air est allumé avec un dispositif d'allumage, dans lequel au moins un dispositif d'allumage est désactivé.

**3.** Procédé selon la revendication 2, **caractérisé en ce que** le moteur à combustion interne (1) comprend n chambres de combustion, et que le dispositif d'allumage est désactivé pour m chambres de combustion, dans lequel m et n sont des chiffres naturels ≥ 1 et m est ≤ n.

**4.** Procédé selon l'une quelconque des revendications 1 à 3, **caractérisé en ce qu'**après que la vitesse de rotation réelle du générateur de courant alternatif présente une valeur inférieure à une valeur théorique prédéfinie ou dans le cas d'une baisse de la vitesse de rotation réelle à une vitesse supérieure à une valeur maximale prédéfinie, la quantité d'énergie brûlée est au moins en partie augmentée.

**5.** Centrale électrique stationnaire comprenant

- un moteur à combustion interne (1) avec au moins un dispositif d'allumage,
- un générateur de courant alternatif (2), qui peut être opéré par le moteur à combustion interne (1), dans laquelle le générateur de courant alternatif (1) est raccordé à un réseau de distribution électrique (3) dans l'état de fonctionnement et fournit de l'énergie au réseau de distribution électrique (3) et le réseau de distribution électrique (3) prédéfinit la tension théorique et la fréquence théorique du générateur de courant alternatif,

**caractérisée par** un dispositif de réglage (30), qui surveille la tension de générateur effective et/ou la fréquence de générateur effective et/ou le courant du générateur de courant alternatif (1), dans laquelle dans le cas d'une suppression de la tension de générateur provoquée par une défaillance ou une panne du réseau de distribution électrique (3) et/ou dans le cas d'une augmentation de la fréquence de générateur au-dessus d'une valeur limite pouvant être prédéfinie ou à une vitesse supérieure à une valeur limite pouvant être prédéfinie et/ou dans le cas d'une augmentation du courant de générateur au-dessus d'une valeur limite pouvant être prédéfinie ou à une vitesse au-dessus d'une valeur limite pouvant être prédéfinie, le dispositif de réglage (30) réduit l'amenée de carburant au moteur à combustion interne (1), alors que le raccordement du générateur de courant alternatif (2) et du réseau de distribution électrique (3) reste maintenu, et que du carburant sous forme gazeuse est injecté de manière dosée par l'intermédiaire d'une soupape de dosage de gaz (14), dans laquelle la combustion dans le moteur à combustion interne (1) est totalement empêchée au moyen d'un étranglement total de la soupape de dosage de gaz (14), dans laquelle un calcul de la quantité de gaz est poursuivi en permanence en arrière-plan pour le point de fonctionnement instantané du moteur à combustion interne (1), mais n'est pas transmis à la soupape de dosage de gaz (14) pour une certaine durée, lors de laquelle une action de freinage du moteur à combustion interne (1) est requise et dans laquelle, quand le moteur à combustion interne (1) atteint à nouveau un point de fonctionnement souhaité, au niveau duquel l'action de freinage n'est plus requise, l'ajout dosé de gaz est enclenché à nouveau directement sur la soupape de dosage de gaz (14), et que quand une vitesse de rotation réelle du générateur de courant alternatif (2) ou du moteur à combustion interne (1) tombe sous une valeur théorique pouvant être prédéfinie, du carburant est amené à nouveau, dans laquelle une somme composée de la position de phase et de l'angle polaire du générateur de courant alternatif (2) est réglée, jusqu'au retour du réseau de distribution électrique (3), sur une valeur qui était présente avant la défaillance ou la panne.

**6.** Centrale électrique stationnaire selon la revendication 5, **caractérisée en ce que** le moteur à combustion interne (1) comprend n chambres de combustion avec respectivement une amenée de carburant, dans laquelle le dispositif de réglage (30) interrompt l'amenée de carburant vers m chambres de combustion, dans laquelle m et n sont des chiffres naturels ≥ 1 et m est ≤ n.

**7.** Centrale électrique stationnaire selon la revendication 5 ou la revendication 6, **caractérisée en ce que** le moteur à combustion interne (1) comprend n chambres de combustion avec respectivement un dispositif d'allumage, dans laquelle le dispositif de réglage (30) désactive m dispositifs d'allumage, dans laquelle m et n sont des chiffres naturels ≥ 1 et m est ≤ n.

**8.** Centrale électrique stationnaire selon l'une quelconque des revendications 6 à 7, **caractérisée en ce que** le dispositif de réglage (30) augmente l'amenée de carburant et/ou active au moins un dispositif d'allumage dans le cas de la vitesse de rotation réelle du générateur de courant alternatif (2) présentant une valeur inférieure à une valeur théorique pouvant être prédéfinie ou dans le cas d'une modification de la vitesse de rotation par unité de temps au-dessus d'une valeur limite pouvant être prédéfinie.

Fig. 1

Fig. 2

EP 2 526 279 B1

*Fig. 3*

A — Motordrehzahl — Oberes Limit — Unteres Limit — Zeit

B — Ausschaltbefehl — Zeit

C — Berechnete Gasmenge — Zeit

D — Dosierte Gasmenge — Zeit

t0  t3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009134845 A1
- EP 1492222 A2
- EP 1281851 A2